# EUROPEAN PATENT APPLICATION

(11) **EP 3 951 353 A1**
(43) Date of publication of application: **09.02.2022**
(21) Application number: 20305915.9
(22) Date of filing: 07.08.2020
(51) Int. Cl.: G01N 15/14, G01N 21/65

(54) **CHIP-BASED FLOW CYTOMETER AND ANALYZER OF PARTICULATE MATTER WATER CONTAMINANTS**

(71) Applicant: Chambre de Commerce et d'Industrie de Région Paris Ile de France (ESIEE Paris), 93160 Noisy Le Grand (FR); Universite Gustave Eiffel, 77420 Champs-sur-Marne (FR); Centre National de la Recherche Scientifique, 75016 Paris (FR)
(72) Inventor: AMR EWEIS ELSAYED, Ahmed, 77420 Champs-Sur-Marne (FR); ERFAN SAYED AHMED, Mazen, 77420 Champs-Sur-Marne (FR); MARTY, Frédéric, 77700 Magny le Hongre (FR); BOUROUINA, Tarik, 94340 Joinville-le-Pont (FR)
(74) Representative: A.P.I. Conseil

(57) **Abstract**

A device (2) for determining the chemical nature of at least two microplastic particles (3, 26, 28) suspended in a liquid sample (4), so as to distinguish the microplastic particles (3, 26, 28), the microplastic particles (3) having a size smaller than 200 micrometers, the device comprising : a microfluidic chip (1) having at least one first microfluidic channel (13), which comprises an alignment area (11) so that the microplastic particles (3, 26, 28) flow one behind the other in the first microfluidic channel (13), and an analysis area (12) for chemical analysis microplastic particles situated downstream the alignment area (11), spectroscopy means (5) at the analysis area (12) in order to determine in real time during the flow, the chemical nature of each microplastic particle (3, 26, 28), pressure means which displaces the liquid sample (4) in the first microfluidic channel (13)

## Description

### FIELD OF THE INVENTION

The invention relates to a device for the determination of the physical properties and chemical nature of the microplastic particles suspended in a liquid sample.

### STATE OF ART

Research on microplastics and threats that they can represent for ecosystems and humans are only just beginning.

There are still many uncertainties related to the low number of studies on microplastics present in the nature with a size of 10-50 microns or less, which represents the detection limit of the most commonly used analytical equipment. Some experimental studies have revealed increasing concentrations of growingly smaller microplastics. In addition, the toxicity of microplastics and the relative ease with which the number of people crossing biological barriers is expected to increase as their size decreases. This raises new concerns about microplastics.

Detection, identification, and quantification of particulate matter (such as microplastics, in particular) contaminating drinking water is an exhaustive process using the methodologies currently employed in terms of time and cost. Commonly microscopy, or chromatography are used to study microplastics.

There is a device described in patent CN110320250 which comprises a flow channel inlet and outlet to let water samples circulate and a capacitive sensor which is designed based on a microfluidic chip and which is able to count and detect micro-plastic particles. However, this device is not adapted to analyze the composition of microplastic particles, and its size causes a space and a cost problem.

### SUMMARY OF THE INVENTION

The integration of several techniques on-chip to achieve high-throughput analysis of drinking water (regarding particle counts, shapes, sizes, and chemical nature) has not been reported. The device according to the invention allows a precise analysis of the particle physical properties, and/or determine the chemical nature of the particles. Moreover, the invention allows automation, thus makes it cheap and its speed is optimized.

Here, the invention relates to a device used to determine the physical properties and chemical nature of solid microplastic particles suspended in a liquid sample, so as to distinguish the microplastic particles therein, the microplastic particles having a size smaller than 200 micrometers,
the device comprising :
- a microfluidic chip having at least one first microfluidic channel, which comprises an alignment area so that the microplastic particles flow one behind the other in the first microfluidic channel, and an analysis area for physical and chemical analysis microplastic particles situated downstream the alignment area,
- spectroscopy means and imaging means located at the analysis area for determining on-the-fly and in real time during the flow, the physical and chemical nature of the solid microplastic particles; advantageously, spectroscopy means and imaging means allows determining the solid microplastic particles among all the solid microparticles of the liquid sample (microplastic or not),
- pressure means which displaces the water sample in the first microfluidic channel.

The association between the alignment area and the analysis area, makes an analysis on-the-fly (real time or continuously) to determine the chemical nature of the microplastic particles during flow.

Advantageously, the spectroscopy means are mini or micro spectrometer.

Advantageously, the device is connected to a sorter, thus the microplastic particles are sorted and recoverable for a post analysis according to the size.

### BRIEF DESCRIPTION OF THE DRAWINGS

Other advantages and characteristics of the disclosed devices and methods will become apparent from reading the description, illustrated by the following figures, where:
Figure 1a represents a top view of a first embodiment of the microfluidic chip according to the invention, where the microfluidic chip comprises an input of the fluid water sample with microplastic particles, and a technical arrangement of channels with a first microfluidic channel having an alignment area upstream to an analysis area.
Figure 1b represents a cross section A-A of the first microfluidic channel with a two-dimensional implementation, wherein the technical arrangement of channels realizing a part of cytometer with a focusing fluid that surrounds the water sample with microplastic particles from the sidewalls only, so as to align the microplastic particles with each other along the flow path.
Figure 1c represents a cross section A-A of the first microfluidic channel with a three-dimensional implementation, wherein the technical arrangement of channels realizing a part of cytometer with a focusing fluid that encapsulates the water sample from all sides so as to align the microplastic particles with each other along the flow path.
Figure 2a represents a top view of a second embodiment of the microfluidic chip according to the invention, with a structure of a sorter chip according to the invention, comprising a separation area for sorting microplastic particles which are present in the water.
Figure 2b is a microscope image showing a filter array and a reservoir housing with trapped microplastic particles close to 10µm in size.
Figure 2c is a microscope image showing a filter array and a reservoir housing with trapped microplastic particles close to 80µm in size.
Figure 2d represents an example of a result graphic obtained with the use of the spectroscopy applied on the microplastic particles trapped in the reservoirs.

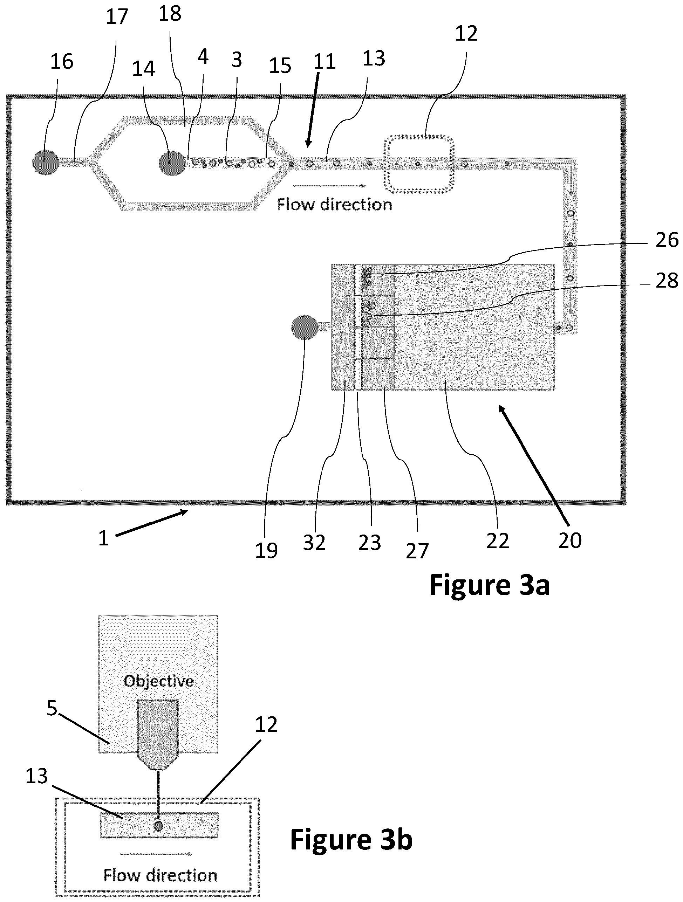

Figure 3a represents a third embodiment of the invention which combines on the microfluidic chip, the first embodiment and the second embodiment such that an alignment area and an analysis area fluidically connected upstream to a sorter.
Figure 3b represents a cross section of the first microfluidic channel system with an objective to make spectroscopic analyses for microplastic particles in water.
Figure 4 represents a top view of a variant of the third embodiment of the invention representing another possible structure of the invention, which combines on the microfluidic chip such that a sorter fluidically connected downstream to several channels which allows to align the microplastic particles and to analyse them, the channels are fluidically connected downstream to reservoirs.
Figure 5a represents a high-speed camera above a section of a microfluidic channel among the several channels of the figure 4, corresponding to the analysis area.
Figure 5b represents an enlarged view of a microfluidic channel among the several channels of the figure 4, corresponding to the analysis area.
Figure 6a represents an objective lens for optical spectroscopic analysis above a section of a microfluidic channel among the several channels of the figure 4, corresponding to the analysis area.
Figure 6b represents an enlarged view of a measure microfluidic channel among the several channels of the figure 4, corresponding to the analysis area with a laser beam.
Figure 7a represents a top view of a possible structure of a sorter chip, according to a variant of the second embodiment of the invention, comprising a separation area for sorting the microplastic particles with a pinching fluid which flows in the opposite direction to the direction of the flow of water sample with microplastic particles.
Figure 7b represents an enlarged view of microplastic particles stopped by the filter in a reservoir.
Figure 8a represents a Deterministic Lateral Displacement chip design, to separate the microplastic particles, before the trapping in the filters.
Figure 8b represents an enlarged view of an array of elements engraved on chip sorting microplastic particles.
Figure 8c represents a trajectory of a large and a small particle in an array of elements engraved on chip.
Figure 8d represents an enlarged view of small and large microplastic particles trapped in reservoirs and stopped by filters.
Figure 9a is a microscope image showing a bifurcated-tree water input linked to an array of elements engraved on chip, to separate the microplastic particles, before the trapping in the filters. The figure 9a represents the entrance or beginning of the sorter.
Figure 9b is a microscope image showing an array of elements engraved on microfluidic chip to separate the microplastic particles, connected fluidically downstream to filters which are connected fluidically downstream to fluid output. The figure 9b is the end of the sorter
Figure 10 represents a Field Flow Fractionation chip design.
Figure 11 represents a top view of a microfluidic chip, the microfluidic chip is comprises several lines of elements engraved on chip which allow the sorting and the filters of microplastic particles which are stopped in front of the filters.
Figure 12a represents an architecture for filters present in reservoirs formed by the channels.
Figure 12b represents another architecture for filters present in reservoirs formed by the channels.
Figure 13 represents a microscope image on a downstream part of a chip, with filters present in reservoirs and an output for water without microplastic particles

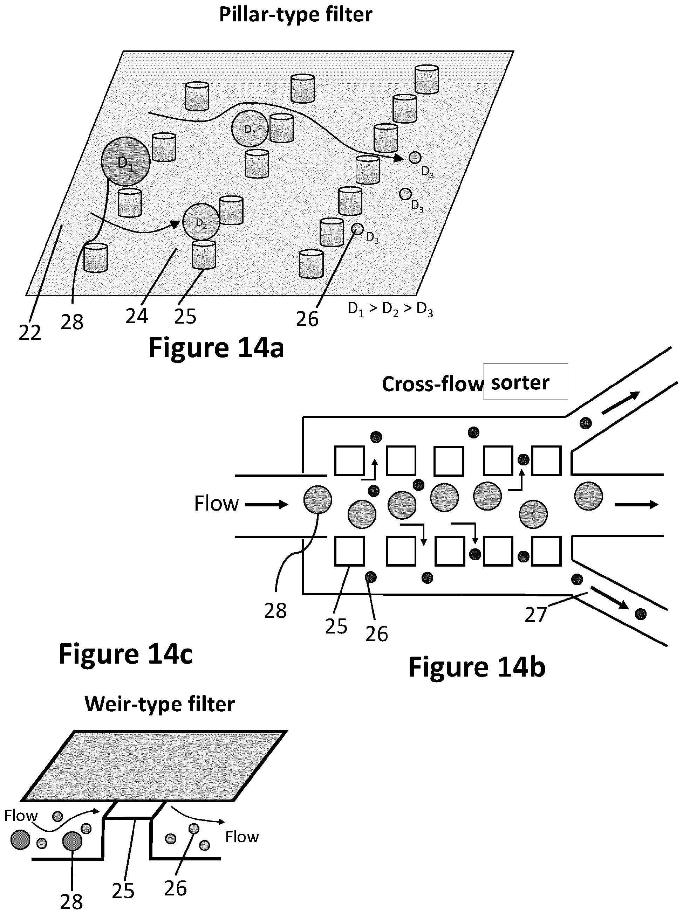

Figure 14a represents a pillar-type filter in a separation area, the microplastic particles being stopped by the pillars.
Figure 14b represents a cross-flow sorter in a separation area, the microplastic particles being not stopped here.
Figure 14c represents a weir-type filter in a separation area, the microplastic particles being stopped by the weir-type filter.
Figure 15a represents a Raman spectrum of standard PS particles trapped on-chip with the characteristic bands of standard PS.
Figure 15b represents a Raman spectrum of standard PMMA particles trapped on-chip with the characteristic bands of standard PMMA.

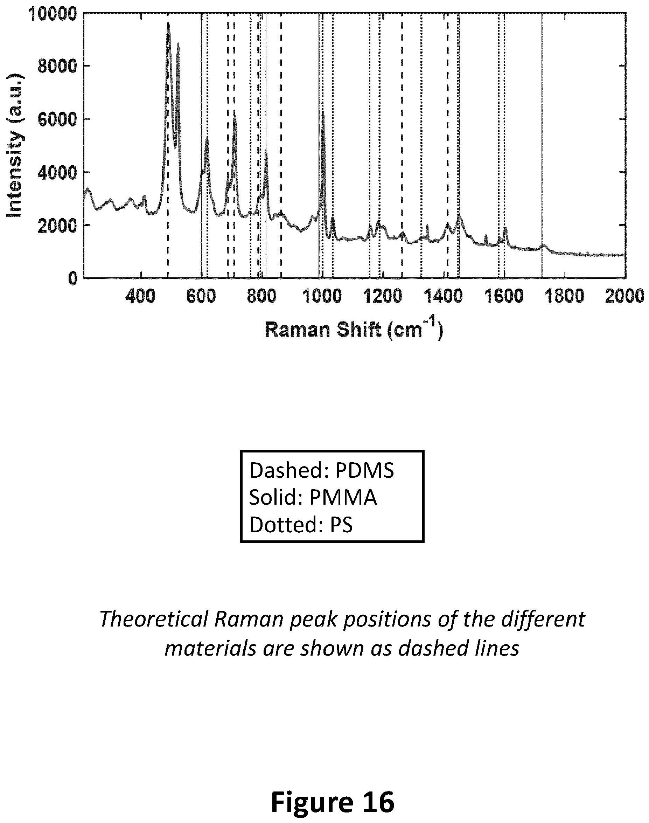

Figure 16 represents a Raman spectrum with theoretical Raman peak positions of the different materials.
Figure 17 represents a measurement system with a microscope, a spectrometer, and a microfluidic chip.

### GENERAL DESCRIPTION

The invention relates to a device 2 comprising a microfluidic chip 1. The device 2 may be used to determine the physical properties and/or the chemical nature of at least the solid microplastic particles 3 suspended in a liquid sample 4, whatever their shape. In the invention, the particles 3 may have a size smaller than 200 micrometers.

Advantageously, but not in limited way, the liquid sample 4 can be pre-concentrated before its passage in the microfluidic chip 1. It can be extracted from a drinking water bottle and comprises all the microplastic particles 3 contained in the drinking water bottle. For instance, for 1 mL, it can have tens to thousands of microplastic particles. Advantageously, it is thousands of microplastic particles per mL.

For instance, the microplastic particles 3 can be one of these types of plastics: PMMA, PS, PP, PE, PA, PVC, PTFE, PET, Nylon or others.

The device 2 comprises:
- pressure means (not shown), either internal or external, for displacing water in the microfluidic chip 1,
- spectroscopy means 5 for determining the chemical nature and quantities of the microplastic particles, and/or imaging means 6 in order for determining the physical nature and quantities of the microplastic particles 3.

The pressure means can be for instance a syringe pump, a peristaltic pump or a vacuum pump. Examples of "internal pressure means" can be also, for instance, the capillary suction force, which does not require any apparatus.

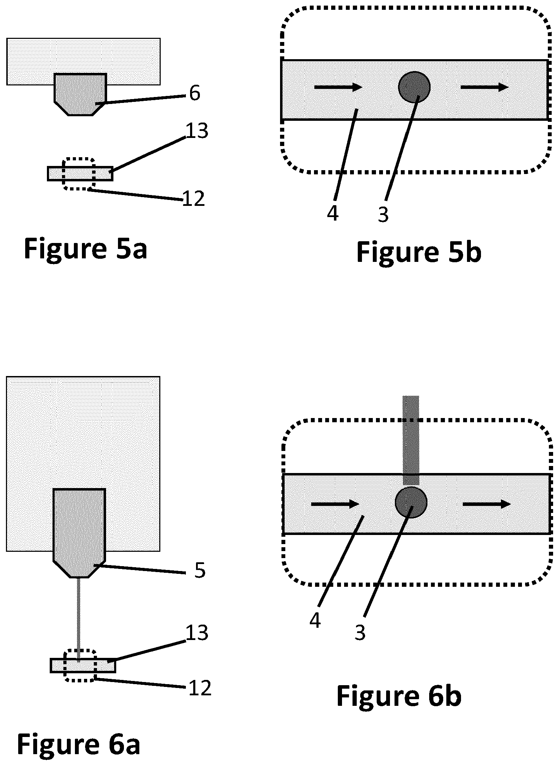

Advantageously, as represented on figures 5a and 5b, the imaging means 6 can comprise an external digital camera, which can be a high-speed camera, to capture images of the microplastic particles 3 in the water sample 4 during their flow.

Advantageously, as illustrated on figures 6a and 6b, the device 2 a Raman spectroscopy or FTIR spectroscopy analysis on-the-fly (real time or continuously) to determine the chemical nature (plastic composition) of the microplastic particles 3 during flow.

These spectroscopy means 5 and imaging means 6 can be on-chip or mounted on a separate external system.

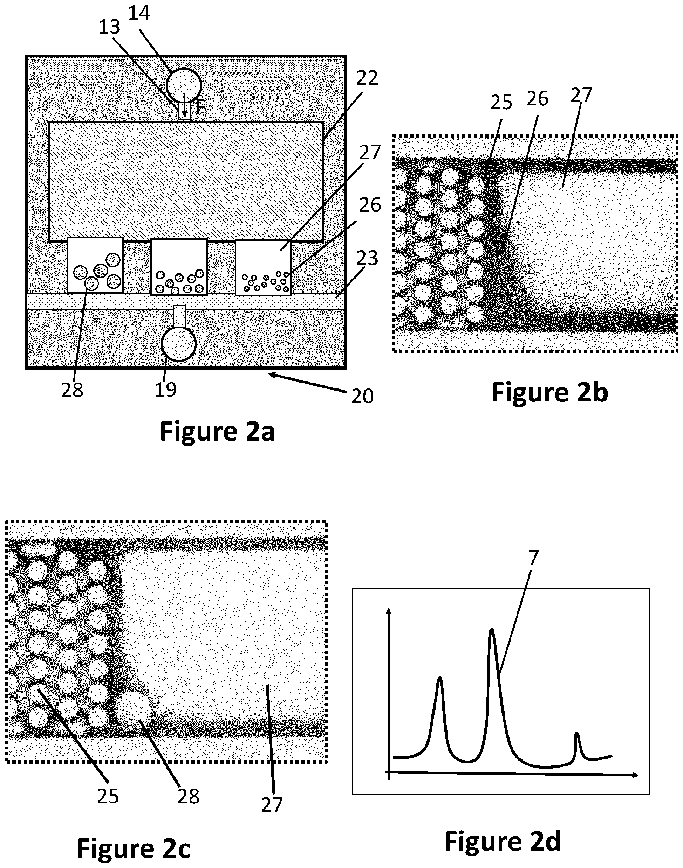

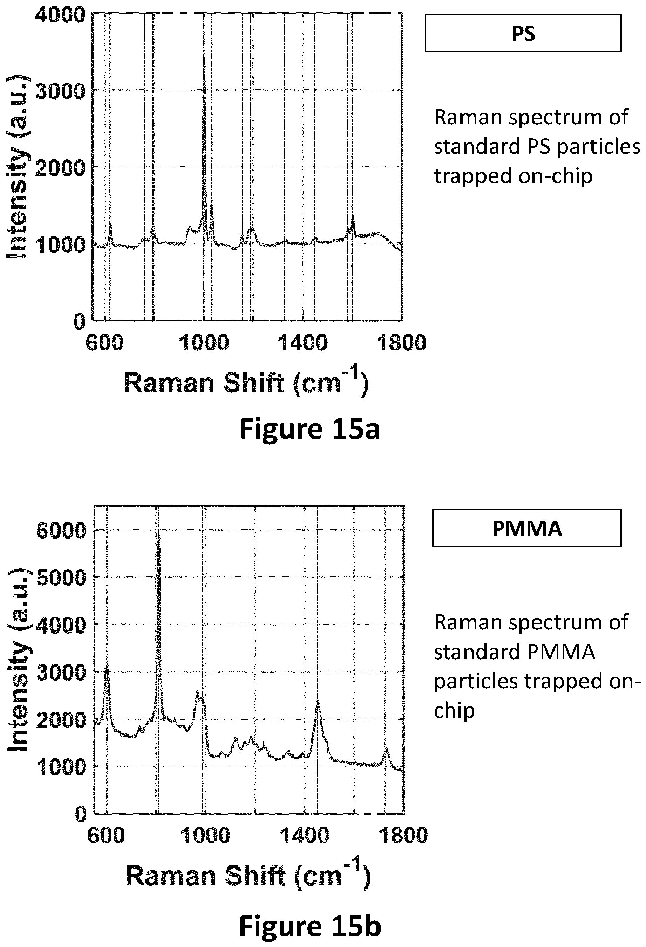

These spectroscopy means 5 and imaging means 6 can give some data and result graphic 7, as illustrated on figure 2d. As illustrated on figures 15a and 15b, these results can give a chemical or physical property with a spectrum, where the data can be extracted based on further analysis of this kind of graphic.

Advantageously, calculating means (not shown) linked to spectroscopy means 5 may be configured to count the number of microplastic particles 3 for each different plastic detected.

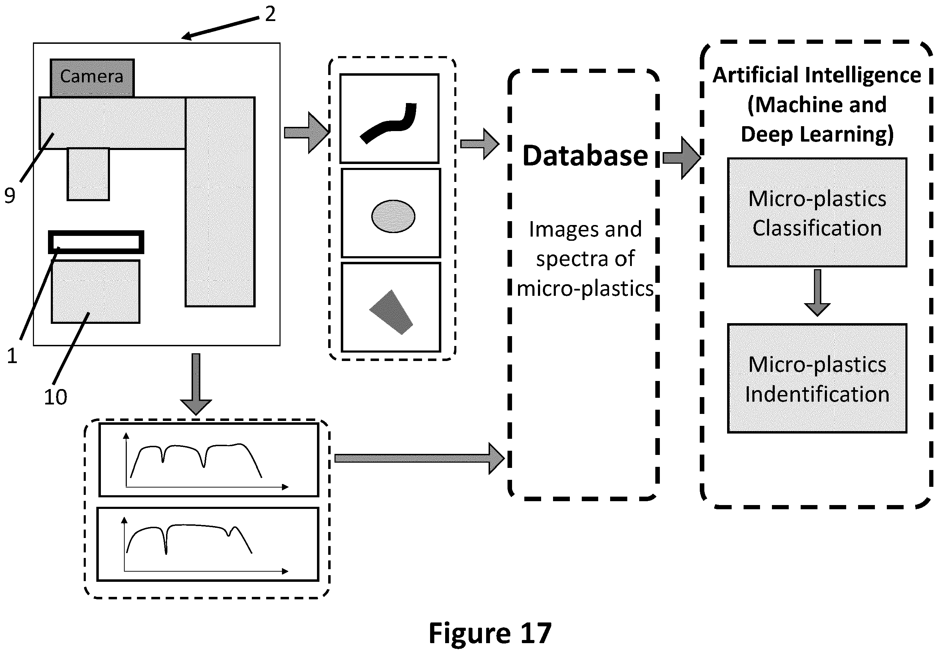

As illustrated on figure 17, the present invention relates also to a measurement system comprising an imaging means 6, a spectrometer 10, the measurement system being a bench top or a miniaturized version for portable integration and the device 2, then, the acquired images and spectra will be analysed either using conventional signal processing or using artificial intelligence software based on machine and deep learning to count, classify and identify the measured microplastics with the help of set of data as a database.

The microfluidic chip 1 can be fabricated on a silicon-substrate, and top-sealed with a glass-substrate, or a PDMS patch, or any other optically transparent material in the visible or infrared ranges. For degraded mode operation, the microfluidic chip 1 can be replaced by a simpler cartridge designed as a simple reservoir 27 of small surface area for the purpose of facilitating the analysis using the spectroscopy means 5 and imaging means 6. In that case, the cartridge can be fabricated either using the microfluidic technologies or using other conventional technologies and corresponding materials used for the fabrication of water filters, which includes plastic materials for instance.

For instance, the microfluidic chip 1 can be fabricated entirely using PDMS.

### Microfluidic chip 1 with the alignment area 11 and the analysis area 12

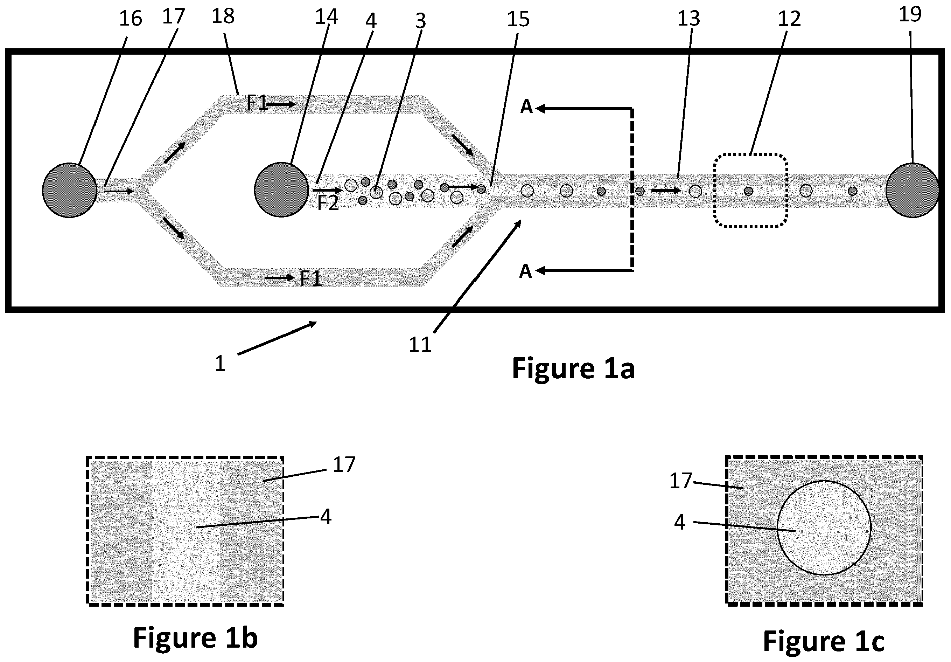

As represented on figure 1a, in a first variant of the first embodiment of the invention, the microfluidic chip 1 comprises, in a first microfluidic channel 13, an alignment area 11, and an analysis area 12 downstream the alignment area 11.

The alignment area 11 and the analysis area 12 may be configured as follows:
(i) A first section with:
   - an input 14 for the water sample 4, delivering a water with a high concentration of microplastic particles 3, which flows according to arrows F2 in an entrance channel 15,
   - and an input 16 for a focusing fluid 17, which flows according to arrows F1, delivering for instance an ultra-pure water, in two focusing channels 18 which surrounds the entrance channel 15,
   - the entrance channel 15 and the two focusing channels 18 both being connected fluidically to a second section,
(ii) The second section, which is the first microfluidic channel 13 enabling the flow of single microplastic particles 3, flowing sequentially one behind another and where the focusing fluid 17 surrounds the water sample fluid 4, the width of the water sample 4 being adjustable by changing the flow rates of the focusing fluid 16 and water sample fluid 4,
(iii) A third section, which is the analysis area 12, for implementing spectroscopy means 5 and imaging means 6, in order to determinate on-the-fly and in real time during the flow: the chemical nature of the microplastic particles 3, and/or their number, size, color and shape, respectively.

In a first example, as illustrated on figure 1b, the microfluidic chip 1 is implemented in a two-dimensional implementation manner where the focusing fluid 17 only surrounds the water sample 4 from the first microfluidic channel 13 sidewalls. In a second example, as illustrated on figure 1c, the microfluidic chip 1 is implemented in a three-dimensional implementation manner where the focusing fluid 17 encapsulates the water sample 4 from all sides in the first microfluidic channel 13.

Water flow rates can be in the order of microliters per minute (can reach milliliters per minute). Particles can range from a few units to tens of thousands of units per sample. Advantageously, there are thousands of microplastic particles per sample.
Each particle can be presented for imaging or spectroscopic analysis during flow for a duration in the order of milliseconds.

Advantageously, the water sample comes from one liter of common water, the microplastic particles contained in the liter can be concentrated into a few milliliters to insert it into the chip.

The alignment area 11 can be a microflow cytometer.

The microfluidic chip 1 is structured to push the focusing fluid 17 with water sample 4 into the first microfluidic channel 13 being configured so that microplastic particles 3 flow at the analysis area 12 until an output 19. The microfluidic chip 1 can be configured so that each microplastic particle 3 is imaged individually as it passes through the analysis area 12 or can be configured so that multiple microplastic particles 3 are imaged simultaneously as they pass through the analysis area 12.

In a second variant of the first embodiment of the invention (not shown), the alignment area 11 comprises a serpentine part, to align the flow of single microplastic particle 3, flowing sequentially one behind another.

Advantageously, the analysis area 12 can comprise an objective lens for optical spectroscopic analysis, a high-speed camera, or other particle analysis instruments.

### Microfluidic chip 1 with a sorter 20

In a second embodiment of the invention, the microfluidic chip 1, as represented on figure 2a, comprises:
- the first microfluidic channel 13 in which the microplastic particles 3 with the water sample flow (as represented by arrow F),
- a sorter 20 connected fluidically to the first microfluidic channel 13 and which comprises a sorting chamber 21 which allows the separation of the microplastic particles 3 in a separation area 22,
- at least one filter 23 in the sorting chamber 21 allowing the trapping of the microplastic particles 3 to accumulate the microplastic particles 3 in different stop areas 24 on the filter 23 of the microfluidic chip 1 according to their size,
   the filter 23 being formed by patterns engraved on the microfluidic chip 1,
- at least one output 19 connected fluidically to the sorting chamber 21, to exit the water sample 4 without the microplastic particles 3.

Water flow rates can be in the order of microliters per minute (can reach milliliters per minute). Particles can range from a few units to tens of thousands per sample. Sorting of particles is continuous as the water sample flows.

Advantageously, the microfluidic chip may comprise a sorter 20 with:
- a sorting chamber 21 which comprises the filter 23 and is connected fluidically to the first microfluidic channel 13 with a separation area 22 upstream the filter 23, so as to allow the separation of the microplastic particles before their trapping in the filter 23,
- the filter 23 comprises first patterns engraved on-chip
- the separation area 22 comprises second patterns engraved on-chip, second patterns having a gap superior to the gap of the first patterns, the first gap being inferior to the size of the microplastic particles 3 to filter 23, and
- an evacuation area 32 situated downstream the filter 23 and connected to the output 19.

Advantageously, the stop area presents a surface inferior to 10 mm², advantageously inferior to 1 mm², advantageously inferior to 0.1 mm², advantageously, inferior to 0.05 mm², advantageously inferior to 0.01 mm² [so as to concentrate the microplastic particles on a small surface for their analysis].

The evacuation area 32 lets water flow without microplastic particles 3 until the output 19.

In a particular embodiment, the sorting chamber comprises series of filters 23 to trap the microplastic particles 3 already sorted, with different stop areas 24, so as to accumulate the sorted microplastic particles 3 in the microfluidic chip 1 according to their size.

Advantageously, the sorter 20 comprises a sorting chamber 21 and an evacuation area 32. The sorting chamber 21 comprises a separation area 22 and the filters 23 situated upstream the evacuation area 32. The separation area 22 comprises patterns engraved and stop areas 24 created by the filters 23.

The filters 23 can comprise two patterns: first patterns situated downstream the separation area 22, the presentation area 22 having second patterns, second patterns having a gap superior to the gap of the first patterns, which can be in the order of few micrometers or tens of micrometers, for instance.

The gap determines the spatial distance between two elements engraved 25 on chip of the same patterns or filters 23.

Advantageously, the filters 23 comprise several elements engraved 25 on chip allowing the trapping of the microplastic particles 3 with different sizes according to the distance between two elements engraved 25 on chip. The filters 23 can be on the separation area 22 and reservoirs 27.

The separation area 22 is an area for sorting the microplastic particles 3 which enter, the separation area 22 can be formed by an array of elements engraved 25 on chip, the distance between two elements engraved 25 on chip for the separation area 22 being superior to the distance between two elements engraved 25 for the filters 23 on reservoirs 27.

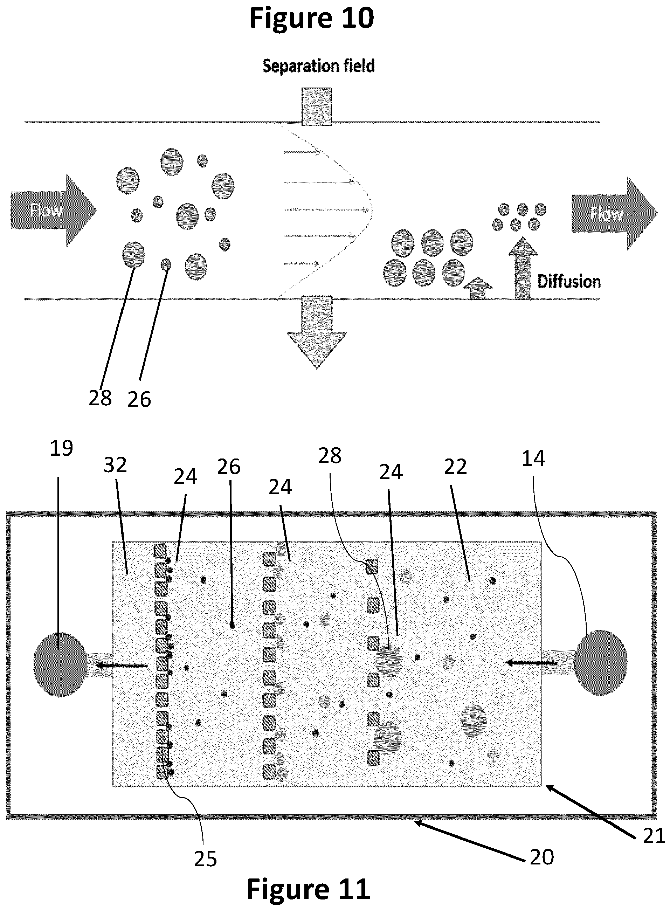

Advantageously, the sorting chamber 21 comprises a filter 23, as represented on figure 2a, or a series of filters 23, as illustrated on figure 11.

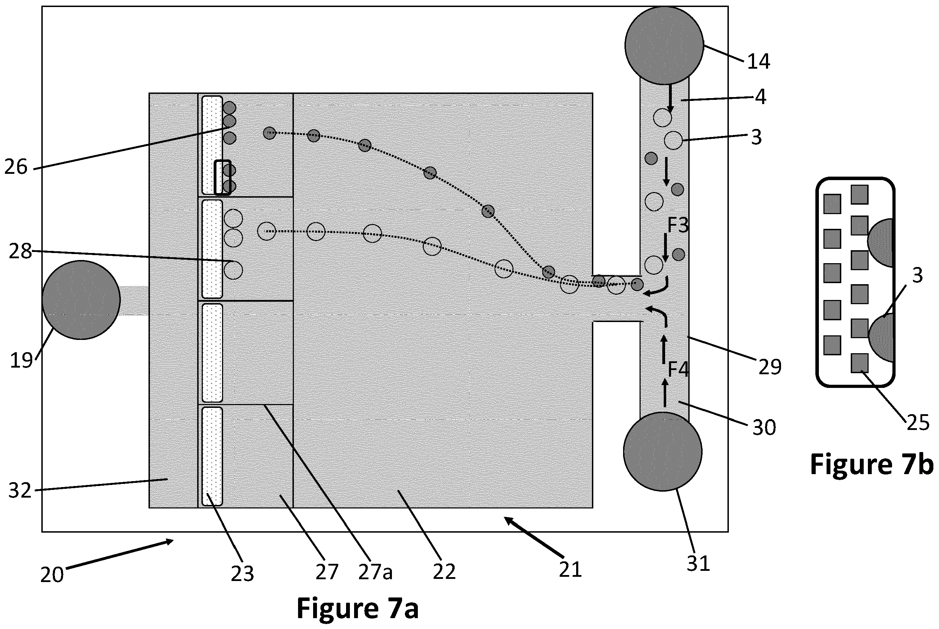

Advantageously, the filters 23 with the first patterns can stop the microplastic particles 3 thanks to elements engraved 25 on-chip as represented on figure 7b, to let the water sample 4 exit without microplastic particles 3. These patterns can have a period ranging from a fraction of a micron to tens of microns, with one row or more of elements. For a linear pattern (one row) the density can be in the range of tens to thousands of elements per 1 mm.

Advantageously, the filters 23 with the second patterns can stop parts of microplastic particles 3 according to their size and can let small particles 26 pass according to the periodicity/density of elements engraved 25 on chip. The second patterns can create a stop area 24 for particles according to their size. These patterns have a lower density than the elements engraved 25 on-chip, where in this case they will be trapping bigger particles.

The gap of the patterns of the sorting section depends on the target particle size. For our application this gap can range from 25 to 250 micrometers. The trapped microplastic particles 3 can be contained in different reservoirs 27 depending on the size of microplastic particles 3, as illustrated on figures 2b and 2c.

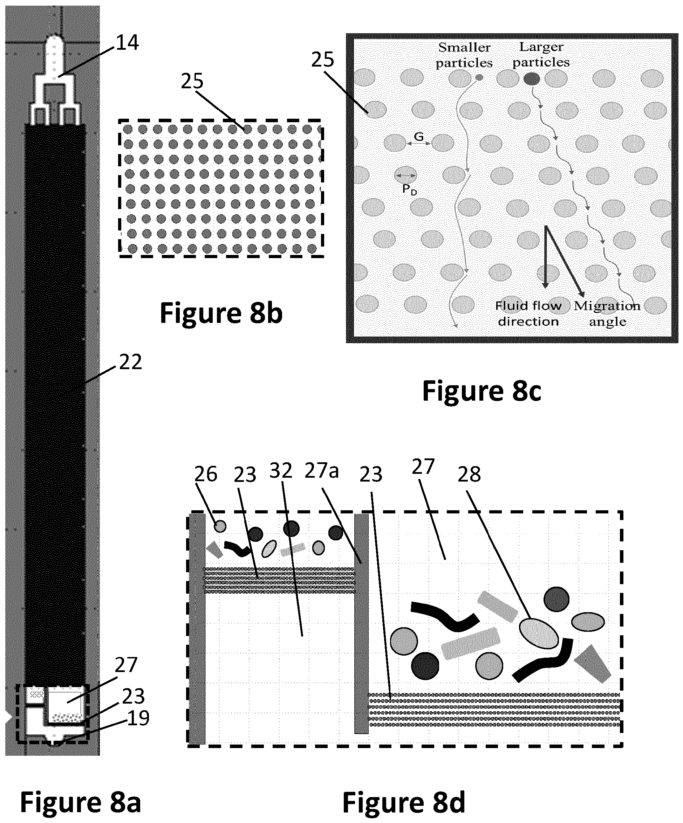

In one realisation, the first and/or second patterns can consist of an array, a line or elements engraved 25 and disposed according to a pattern of a line or array on-chip, as illustrated on figure 8d.

Advantageously, each filter 23 may be spatially shifted with respect to the adjacent filters 23, to enable optical spectroscopic analysis of the trapped microplastic particles 3, without having an interfering optical signal from adjacent filters 23.

The first and/or second patterns which trap the microplastic particles 3 can be chosen among the list: pillar-type, weir-type filter or cross-flow filters with obstacles of different shapes like circles, cylinders, squares, or rectangles.
Each reservoir 27 can have an output 19 after the filters 23, or each reservoir 27 can be connected to the same output 19.

An evacuation area 32 can be situated downstream each filter 23.

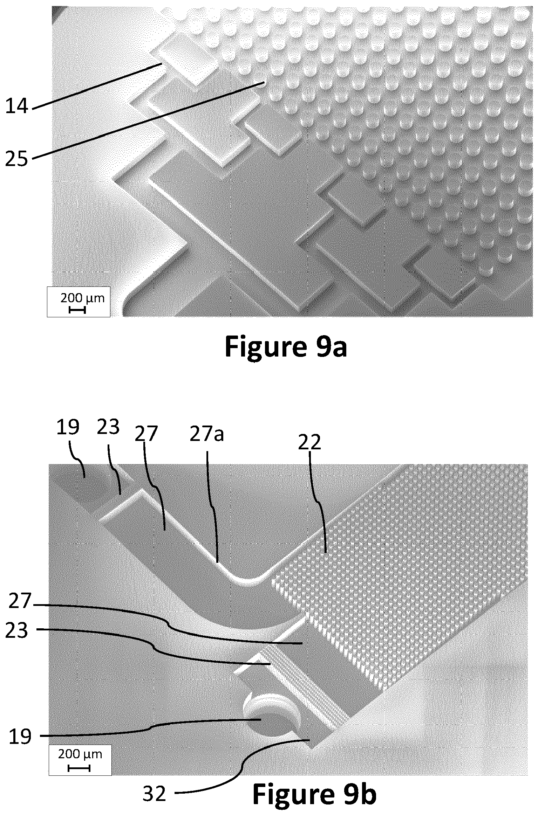

The first microfluidic channel 13 delivering the water sample 4 can be a single channel, a bifurcated-tree input as shown on figure 9a, or other inputs.

Advantageously, the sorting chamber 21 may comprise several reservoirs 27 with walls engraved 27a on the microfluidic chip 1 to guide the microplastic particles 3, each reservoir 27 having a filter 23 enabling the trapping and accumulation of the microplastic particles 3 on-chip, according to their size.
A possible structure of the sorter 20 can have only two reservoirs 27, one with a rotation for small particles 26 and the other one for big particles 28, as illustrated on figure 9b. Each reservoir 27 can have a filter 23, which comprises the first patterns (i.e. with a high periodicity of elements engraved 25 on chip) and an output 19 to let the water sample 4 flow without microplastic particles 3.

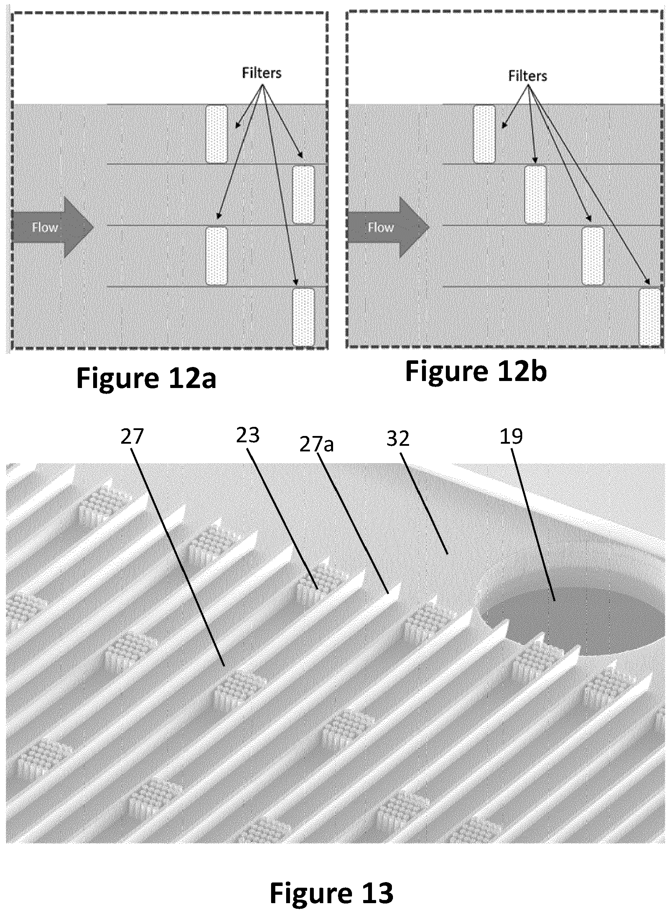

The filters 23 in reservoirs 27 can be arranged differently. For instance, a possible architecture has N lines (N being a number chosen by the builder) with walls 27a to form reservoirs 27 in the direction of the flow, a first reservoir 27 having a filter 23 on the first line, a second reservoir 27 has a filter 23 on the second line and so on until N lines, the filter 23 being arranged at different axial positions in regard to the flow in each reservoir 27.
A periodicity of several filters 23 at different axial positions can be realized. As shown figure 12a, one periodicity is realized with two different filters 23 which are in two lines and so on each set of two lines.

As shown figure 13, one periodicity is realized with three different filters 23 which are in three lines and so on each set of three lines.

A possible architecture for the filters 23 in the sorter 20 can be a succession of steps like a staircase, the filters 23 being offset axially and laterally one after the other, a filter 23 in a first reservoir 27 is lower laterally and further axially than the next filter in a second reservoir and so on, as represented on figure 12b.

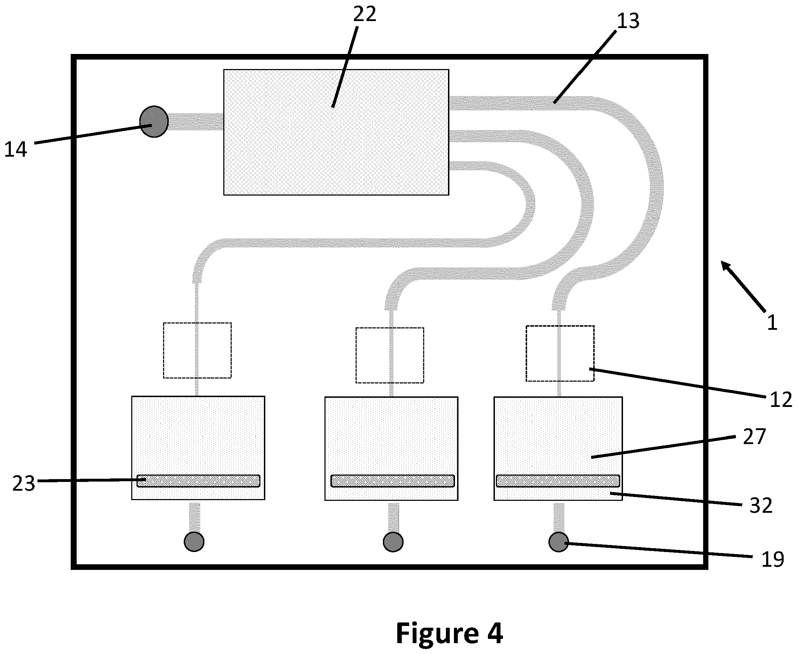

The microfluidic chip 1 can have a structure such that the separation area 22 sorting the microplastic particles 3 by size, is connected fluidically upstream to several microfluidic channels 13 in parallel, each parallel microfluidic channel 13 being connected upstream to reservoirs 27 which each comprise a filter 23 to trap microplastic particles 3 and let the water sample 4 flow without microplastic particles 3, as illustrated on figure 4.

Each parallel microfluidic channel 13 comprises an alignment area 11 and an analysis area 12.

Different designs of the separation area 22 can be contemplated:
- The separation area 22 sorts microplastic particles 3 thanks to a field flow fractionation and pushes it into different filters 23/reservoirs 27; The analysis area 12 that can be on filters 23/reservoirs 27.
- The separation area 22 sorts microplastic particles 3 and pushes them into different transport parallel microfluidic channel 13 delivering microplastic particles 3 in reservoirs 27; the analysis area 12 can be on each transport parallel microfluidic channel 13 and/or on filters 23/reservoirs 27.
- The separation area 22 comprises different layer of filter 23, the distance between two elements engraved 25 on the chip is smaller and smaller as the current is flowing. The big particles 28 are stopped by the first bigger filter 23 and so on for the medium and small particles 26; thus, the distance between the elements engraved 25 decreases with the size of the microplastic particles 3 to separate. This structure avoids the use of reservoirs 27 and uses only filters 23 with stop areas 24 in front of or in the elements engraved 25 of the filters 23.
- The separation area 22 comprises an array of identical elements engraved 25 like pads on the chip sorting the microplastic particles 3 according to their size, as illustrated on figure 8c.

For instance, in a first variant of the sorter 20, the microfluidic chip 1 can comprise a passive sorter 20 using technique to separate microplastic particles 3 spatially on-chip in the separation area 22, chosen among the list:
- Pinching Flow Fractionation as represented on figure 7a,
- Deterministic Lateral Displacement by patterns engraved on chip as represented on figure 8a,
- Field Flow Fractionation as illustrated on figure 10,
- Cascaded filtering on-chip as shown on figure 11, or
- another conventional technique for sorting micro-scale plastic particles.

In a second variant of the sorter 20, the microfluidic chip 1 comprises an active sorter 20 using the same techniques mentioned below to separate microplastic particles 3 spatially on-chip in the separation area 22 chosen coupled with electrical / electromagnetic means to separate the microplastic particles 3.

In the pinching flow fractionation, the microfluidic chip 1 can be configured to comprise a second microfluidic channel 29 of a pinching fluid 30 which is connected to the first microfluidic channel 13 in front of the sorting chamber 21, the pinching fluid 30 flow F4 being opposite to the water sample 4 flow F3 (which can be F1+F2) in the first microfluidic channel 13 to sort the microplastic particles 3 in the sorting chamber 21. The pinching fluid 30 is delivered by an input pinching fluid 31.

Advantageously, in the pinching flow fractionation, the microfluidic chip 1 can comprise an intermediary chamber between the first microfluidic channel 13 and the sorter 20 on-chip to regulate the flow rate of the water sample 4, the focusing fluid 17 and other fluids if needed for sorting the microplastic particles 3. The flow rate of the focusing fluid is higher than the sample fluid. The ratio between the focusing flow rate and sample flow rate is greater than 1. For instance, a typical value for the ratio is 5.

The microfluidic chip can comprise a single filter 23 connected fluidically to the first microfluidic channel 13 to trap and accumulate all microplastic particles on a stop area within the microfluidic chip no matter their size, with no need of a sorter 20 neither a sorting chamber 21 nor a separation area 22.

### Microfluidic chip 1 which combines the sorter 20, the alignment area 11 and the analysis area 12

In a third embodiment of the invention, the microfluidic chip 1 comprises the sorter 20 on the one hand, the alignment area 11, and the analysis area 12 on the other hand.

The microfluidic chip 1 can have different structures depending on the combination of these three components: the sorter 20, the alignment area 11 and the analysis area 12.

The three components can be disposed in any order relative to each other, i.e.:
- the sorter 20 upstream to the alignment area 11; or
- the alignment area 11 upstream to the sorter 20,
- the analysis area 12 within or near the alignment area 11, or within the sorter 20, near the filters 23.

The analysis area 12 comprise spectroscopy means 5 to determinate the chemical nature of the microplastic particles and can allow to measure this chemical nature on-the-fly and in real time.

The chip can be used without the analysis area. In this case, the reservoirs 27 can be transported with the microplastic particles 3 and then analysed.

There is one or several microfluidic channel 13, between the sorter 20 and the alignment area 11.

Advantageously, the alignment area 11 can comprise a serpentine part or a microflow cytometer.

The microfluidic chip 1 can comprise:
- in parallel, several sorters 20 and several alignment and analysis areas, one alignment area per sorter 20, to analyse several water samples 4 at the same time (not shown), or
- one sorter 20 and several alignment areas 11, as shown on figure 4.

Advantageously, the microfluidic chip 1 can comprise an intermediary chamber between the first component and the second component to regulate the flow rate of the water sample 4 and other fluid which can be used, between the two first components which are the alignment area 11 and the sorter 20.

## Claims

1. A device (2) for determining the chemical nature of solid microplastic particles (3, 26, 28) suspended in a liquid sample (4), so as to differentiate the solid microplastic particles (3, 26, 28) from each other, the microplastic particles (3) having a size smaller than 200 micrometers, the device comprising:
• a microfluidic chip (1) having at least one first microfluidic channel (13), which comprises an alignment area (11) so that the microplastic particles (3, 26, 28) flow one behind the other in the first microfluidic channel (13), and an analysis area (12) for chemical analysis of microplastic particles situated downstream the alignment area (11),
• spectroscopy means (5) at the analysis area (12) in order to determine in real time during the flow, the chemical nature of each microplastic particle (3, 26, 28),
• pressure means which displaces the liquid sample (4) in the first microfluidic channel (13).

2. The device (2) of claim 1, wherein the alignment area (11) comprises:
(i) A first section with an input (14) for the liquid sample (4) and an input (16) for a focusing fluid (17) both being connected fluidically to a second section,
(ii) The second section, which is the first microfluidic channel (13) enabling the flow of single microplastic particles (3, 26, 28), flowing one behind another and where the focusing fluid (17) surrounds the liquid sample (4), the width of the liquid sample (4) being adjustable by changing the flow rates of the focusing fluid (17) and liquid sample (4),
(iii) A third section, still within the microfluidic channel (13), which is the analysis area (12), for implementing spectroscopy means (5) in order to determinate on-the-fly and in real time during the flow: the chemical nature of the solid microplastic particles (3, 26, 28).

3. The device (2) of any of claims 1-2, wherein the analysis area (12) comprises imaging means (6) in order to determinate on-the-fly and in real time the physical properties of the particles.

4. The device (2) of claim 3, wherein the imaging means (6) are configured to detect the number, the size, the color and the shape of the microplastic particles (3, 26, 28).

5. The device (2) of any of claims 1-4, wherein calculating means linked to spectroscopy means (5) are configured to count the number of microplastic particles (3, 26, 28) for each different plastic detected.

6. The device (2) of any of claims 1-5, wherein the microfluidic chip (1) is configured to realize a two-dimensional implementation in which the focusing fluid (17) only surrounds the liquid sample (4) from the first microfluidic channel (13) sidewalls, or a three-dimensional implementation in which the focusing fluid (17) encapsulates the liquid sample (4) from all sides.

7. The device (2) of claim 1, wherein the alignment area (11) comprises a serpentine part.

8. The device (2) of any of claims 1-7, wherein the analysis area (12) comprises Raman spectroscopy or FTIR spectroscopy analysis on-the-fly to determine the chemical nature of the microplastic particles (3, 26, 28) during flow.

9. The device (2) of any of claims 1-8, wherein the device (2) comprises:
- at least one filter (23) allowing the trapping of the microplastic particles (3, 26, 28) in the flow to accumulate the microplastic particles (3, 26, 28) in at least one stop area (24) on the filter (23) of the microfluidic chip (1) according to their size, the filter (23) being formed by patterns engraved on the microfluidic chip (1),
- at least one output (19) downstream the filter (21), to exit the liquid sample (4) without the microplastic particles (3) from the microfluidic chip (1).

10. The device (2) of any of claims 1-9, wherein the stop area (24) comprises a surface inferior to 10 mm², advantageously inferior to 1 mm².

11. The device (2) of any of claims 1-10, wherein the stop area (24) comprises a surface inferior to 0.5 mm².

12. The device (2) of any of claims 1-11, wherein the device (2) comprises a sorter (20) with:
- a sorting chamber (21) which comprises the filter (23) and is connected fluidically to the first microfluidic channel (13) with a separation area (22) upstream the filter (23), so as to allow the separation of the microplastic particles (3, 26, 28) before their trapping in the filter (23),
- the filter (23) comprises first patterns engraved on-chip
- the separation area (22) comprises second patterns engraved on-chip, second patterns having a gap superior to the gap of the first patterns,
the first gap being inferior to the size of the microplastic particles (3) to filter (23), and
- an evacuation area (32) situated downstream the filter (23) and connected to the output (19).

13. The device (2) of claim 12, wherein the sorting chamber (21) comprises series of filters (23) to trap the microplastic particles (3, 26, 28) already sorted, with different stop areas (24), to accumulate the sorted microplastic particles (3, 26, 28) in the microfluidic chip (1) according to their size.

14. The device (2) of any of claims 9-13, wherein each filter (23) is spatially shifted with respect to the adjacent filters (23) in the direction of the flow and the same evacuation area (32).

15. The device (2) of any of claims 9-14, wherein the sorting chamber (21) comprises several reservoirs (27) which comprise, each, walls engraved (27a) on the microfluidic chip (1) to guide the microplastic particles (3, 26, 28) and delimit the stop area (24), each reservoir (27) having a filter (23) and the stop area (24) associated, enabling the trapping and accumulation of the microplastic particles (3, 26, 28) on-chip, according to their size.

16. The device (2) of any of claims 9-15, wherein the first and/or second patterns consisting of an array, or a line of elements engraved on-chip (25).

17. The device (2) of any of claims 9-16, wherein the first and/or second patterns are chosen among the list: pillar-type or cross-flow filters with obstacles of different shapes like circles, cylinders, squares or rectangles.

18. The device (2) of any of claims 9-17, wherein the microfluidic chip (1) comprises a passive sorter (20) using technique to separate particles spatially on-chip in the separation area (22) chosen among the list:
- Pinching Flow Fractionation,
- Deterministic Lateral Displacement with patterns engraved on chip,
- Field Flow Fractionation,
- Cascaded filtering on-chip, or
- another conventional technique for sorting micro-scale particles.

19. The device (2) of any of claim 9-18, wherein the microfluidic chip (1) is configured to comprise a second microfluidic channel (29) of a pinching fluid (30) which is connected to the first microfluidic channel (13) in front of the sorting chamber (21), the pinching fluid (30) flow being opposite to the liquid sample (4) flow in the first microfluidic channel (13) to sort the microplastic particles (3, 26, 28) in the sorting chamber (21).

20. The device (2) of any of claims 9-19, wherein the microfluidic chip (1) comprises an intermediary chamber between the first microfluidic channel (13) and the sorter (20) on-chip to regulate the flow rate of the liquid sample (4), the focusing fluid (17) and other fluids if needed for sorting the microplastic particles (3, 26, 28).

21. The device (2) of any of claims 1-20, wherein the microfluidic chip comprises a single filter (23) connected fluidically to the first microfluidic channel (13) to trap and accumulate all microplastic particles on a stop area (24) within the microfluidic chip (1) no matter their size.

22. The device (2) of any of claims 1-21, wherein the microfluidic chip (1) is fabricated on a silicon-substrate, and top-sealed with a glass-substrate, or a PDMS patch, or any other optically transparent material in the visible or infrared ranges.

23. The device (2) of any of claims 1-22, wherein the spectroscopy means are configured to determine each microplastic particle (3, 26, 28) which is composed of one of these types of plastics: PMMA, PS, PP, PE, PA, PVC, PTFE, PET, Nylon or others.
